# EUROPÄISCHE PATENTSCHRIFT

(11) **EP 3 666 481 B1**
(45) Veröffentlichungstag und Bekanntmachung des Hinweises auf die Patenterteilung: **15.01.2025**
(21) Anmeldenummer: 19000552.0
(22) Anmeldetag: 09.12.2019
(51) Int. Cl.: B26F 1/32, B26B 27/00, A47J 23/00, A47J 25/00

(54) **WERKZEUG ZUM AUSHÖHLEN VON LEBENSMITTELN**
TOOL FOR CORING FOODS
OUTIL PERMETTANT DE CREUSER DES DENRÉES ALIMENTAIRES

(30) Priorität: 10.12.2018 DE 202018005639 U
(43) Veröffentlichungstag der Anmeldung: 17.06.2020
(73) Patentinhaber: Maier, Fritz, 83104 Tuntenhausen (DE)
(72) Erfinder: Maier, Fritz, 83104 Tuntenhausen (DE)

(56) Entgegenhaltungen:
- DE-U1- 8 230 391
- FR-A2- 2 449 412
- GB-A- 2 488 597

## Beschreibung

Diese Erfindung betrifft eine Vorrichtung, ein Werkzeug, zum Aushöhlen von Lebensmitteln, vorzugsweise von Würsten, in ihrem gesamten länglichen Verlauf, um die Lebensmittel oder die Würste anschließend wunschgemäß mit anderen Lebensmitteln befüllen zu können.

Aus der DE 82 30 391 U1 ist ein Kernlochbohrer für Kernobst, wie Äpfel bekannt. Dieser umfasst einen rohrförmigen Schaft, dessen vorderer umlaufender Rand als Schneide ausgebildet ist. Weiterhin gibt es einen Stößel im Inneren des Schaftes, der aus einer zurückliegenden Stellung in eine vordere Stellung bringbar ist. Für den Stößel ist mindestens ein aus dem Schaft herausragendes und auf den Stößel einwirkendes Griffstück vorgesehen. Der Schaft ist in Axialrichtung geschlitzt, wobei die Schlitze dem Griffstück als Führung dienen. An seinem rückwärtigen Ende umfasst der Kernlochbohrer einen Kragen, der die für das Ausstechen eines Kerns notwendige axiale Druckkraft aufnimmt.

Die GB 2 488 597 A beschreibt eine Vorrichtung um Lebensmittel auszuhöhlen.

Die Vorrichtung umfasst einen Trägerholm mit einem ersten Messer, welches an dem Ende des Trägerholms angebracht ist. Der Trägerholm kann dadurch in das auszuhöhlende Lebensmittel gestochen werden. In dem Trägerholm ist wiederum ein zweites Messer geführt, was durch eine Druckbewegung in Richtung des ersten Messers gedrückt werden kann.

Aufgabe der Erfindung ist es eine verbesserte Vorrichtung zum Aushöhlen von Lebensmitteln bereit zu stellen.

Dies wird erreicht durch ein Werkzeug gemäß Anspruch 1 und durch ein Verfahren gemäß Anspruch 15.

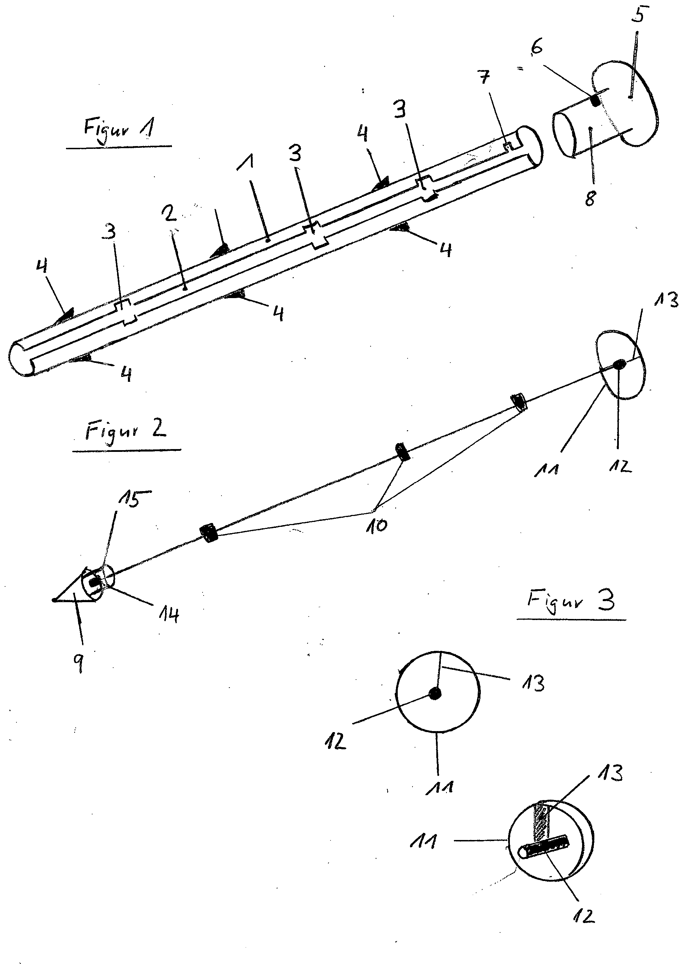

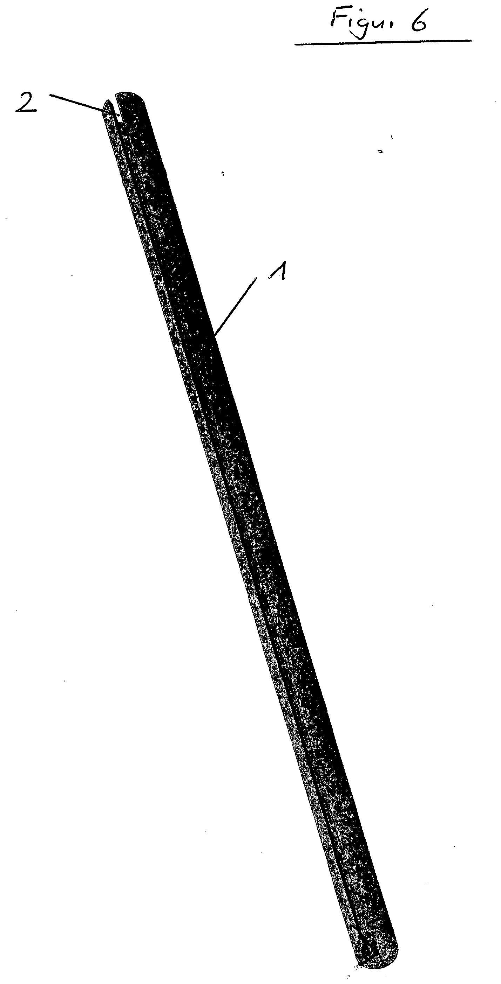

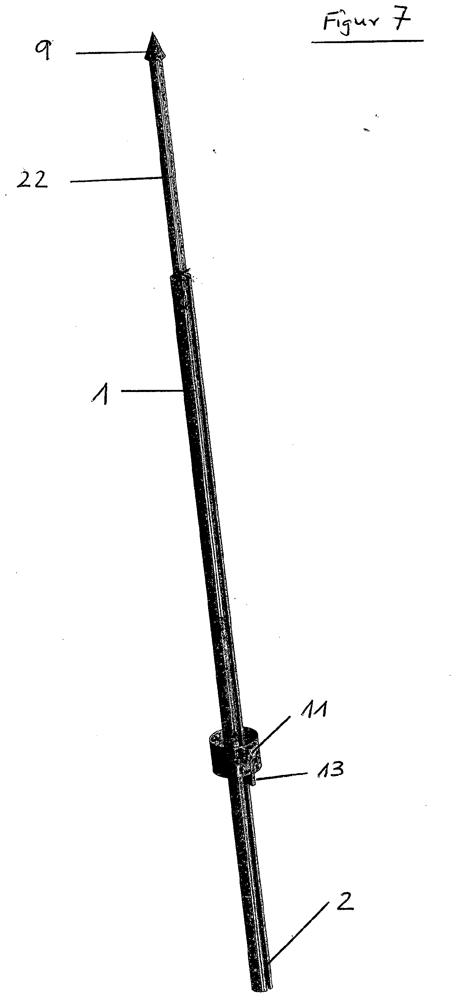

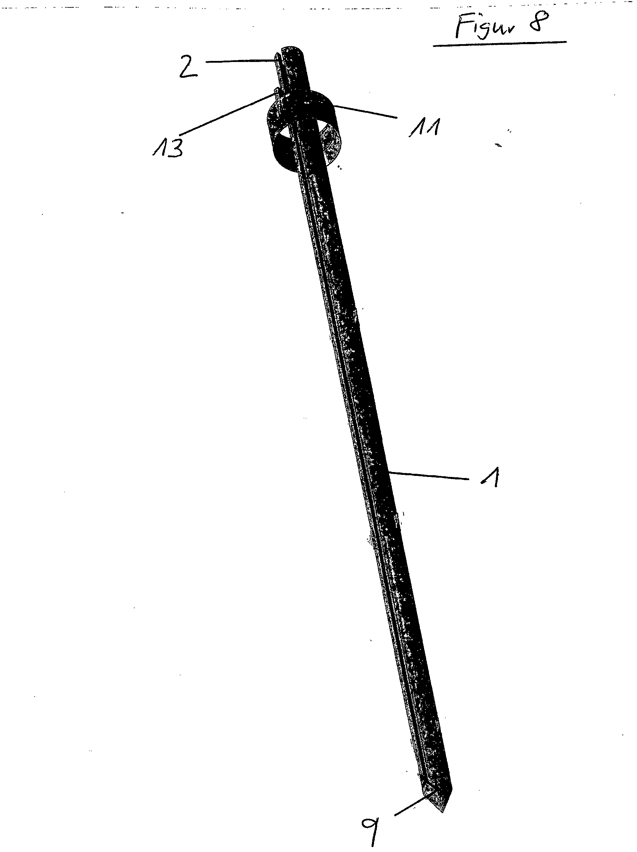

Die Erfindung setzt sich zusammen aus einem Trägerholm, (Fig 1, Fig. 6) einer Zugvorrichtung, (Fig.2) vorzugsweise einem dünnen Edelstahlseil und einem Messer bzw. einer Klinge, (Fig.2. Nr. 11,12,13, Fig. 7 und 8 Nr. Nr. 11, 13) welche vorzugsweise kreisförmig ist, sowie einer kegelförmigen Spitze am Zugwerkzeug (Fig. 2, 7, 8, Nr. 9) In einer weiteren Ausführungsform kann das Messer jede beliebige Form aufweisen, eckig, oval, dreieckig usw. Auch die Spitze kann von der Kegelform abweichen. Der Trägerholm ist länglich und nimmt die Zugvorrichtung auf, an welcher das Messer befestigt ist, welches während dem Durchziehen durch das Lebensmittel mit der Zugvorrichtung, im oder am Trägerholm geführt wird, um ein Schnittergebnis im Lebensmittel zu erhalten, das dem Verlauf des Trägerholmes entspricht und dessen Form dem gewünschten Aushöhlungsergebnis angepaßt ist, wobei sich am Ende der Zugvorrichtung, gegenüberliegend dem Messer, die Spitze befindet, welche das Durchbohren des Lebensmittels mit dem Trägerholm und der Zugvorrichtung erleichtert.

Es gibt auf dem Markt eine Vielzahl von Aushöhlen für Lebensmittel, unter anderem Entkernern mit Griff und einem hohlen länglichen Schneidewerkzeug, oder mit Krallen bzw. Zacken.

Diese Erfindung ist jedoch dahingehend ausgerichtet, die Wurst oder das Lebensmittel zielgerichtet, mittig, exakt abstandshaltend zum Trägerholm, rund, bzw. Kreisförmig oder in einer Form auszuhöhlen, welche wiederum der Form des eingelegten oder verwendeten Messers entspricht, vorzugsweise erfolgt das Aushöhlen auf die Länge des Lebensmittels jedoch kreisrund.

Mit dieser Erfindung sollen für die einseitige Küche Variationsmöglichkeiten ermöglicht werden. Insbesondere bei Würsten entsteht dadurch die Möglichkeit, diese mit wunschgemäßen Lebensmitteln oder Zutaten zu befüllen und so eine abwechslungsreiche Küche zu bieten.

Diese Aufgaben werden dadurch gelöst, dass der Trägerholm innen hohl ist, um das Zugwerkzeug /die Zugvorrichtung in sich aufzunehmen.

In einer Ausführungsform ist der Trägerholm länglich gerade und etwas länger als herkömmliche Bratwürste, er kann jedoch auch in seiner Länge beliebig variieren.

In einer weiteren Ausführungsform ist der Trägerholm bereits leicht gebogen, so dass er in etwa der Biegung von einigen Bratwurstsorten entspricht.

In einer weiteren Ausführungsform ist der Trägerholm aus einem stabilen, jedoch biegsamen Material ausgeführt, möglich ist unter anderem Aluminium, so dass der Nutzer die Form des benötigten Trägerholmes selbst herstellen kann und die Form auch so gehalten wird. Nach dem jeweiligen Gebrauch kann der Trägerholm wieder in seine Ursprungsform zurückgebogen werden.

Der Trägerholm ist vorzugsweise rund, wie ein dünnes Rohr, welches mit einem Schlitz versehen ist, welcher vorzugsweise über die gesamte Länge ausgeführt ist. Das Rohr ist also durch länglichen Schlitz geöffnet. In diesem Schlitz läuft später der rechteckige Teil des Messers, im weiteren Hohlraum des Trägerholmes das zylindrische Zentrum des Messers, während es mit der Zugvorrichtung durch den Holm gezogen wird.

In einer weiteren Ausführungsform kann der Trägerholm jedoch auch eckig, dreieckig oder oval jedoch länglich ausgeführt sein.

Es ist auch eine Ausführungsform denkbar, in welcher der Trägerholm lediglich ein längliches Rohr oder einen eckigen länglichen Körper darstellt - der nicht hohl sein muss sondern auch aus Vollmaterial bestehen kann- ohne mit einem Schlitz versehen zu sein.

In diesem Falle würde das Messer auf einem Durchmesser größerem, hohlen Holm sitzen, der als Zugvorrichtung fungiert, und dessen Form des Hohlraumes der Ausführungsform (rund, oval, eckig, dreieckig usw.) der Form des Trägerholmes entspricht und auf den Trägerholm aufgeschoben wird.

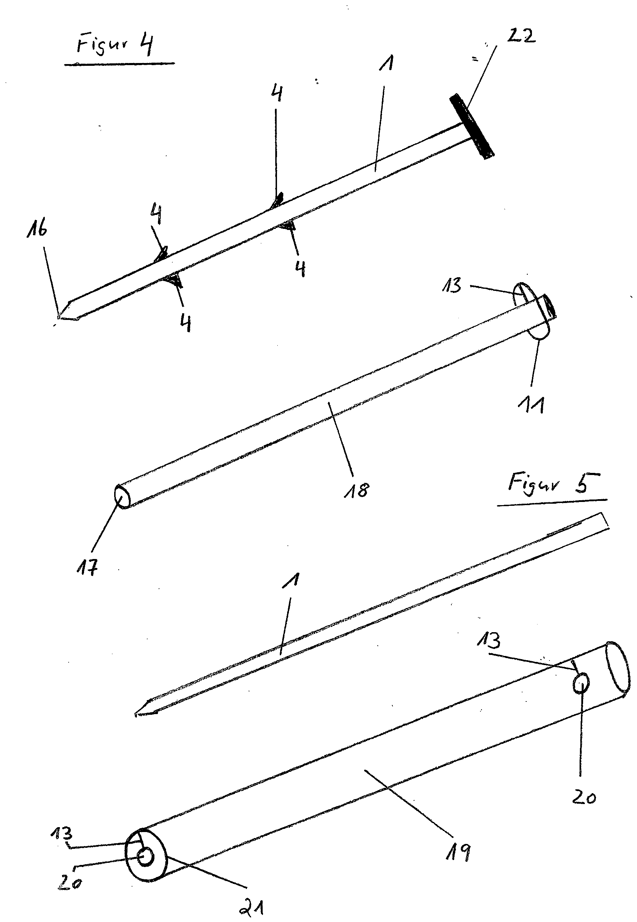

In dieser Ausführungsform ist das Messer, welches vorzugsweise kreisrund ausgeführt ist, mit seinem rechteckigen Messer direkt am durchmessergrößeren Rohr, welches als Zugvorrichtung fungiert, befestigt (Fig. 4. Nr. 13) Es kann der besseren Stabilität wegen auch mit 2 rechteckigen Messern an der Zugvorrichtung befestigt sein.

Es kann in dieser Ausführungsform auch der komplette, aufgeschobene, hohle Holm an sich das Messer darstellen (Fig. 5 Nr. 19) indem der Holm an seinem vorderen, vorzugsweise kreisrunden Bereich (Fig.5.Nr. 21) geschärft ist.

In dieser Ausführungsform wird zuerst der Trägerholm (Fig 5 Nr.1) durch das Lebensmittel geschoben und der hohle Holm, (Fig. 5. Nr. 19) welcher in seiner Gesamtheit als Messer fungiert, welches in seinem vorderen Bereich geschärft ist (Fig. 5 Nr. 21) wird von hinten auf den Holm aufgeschoben und durch das Lebensmittel gedrückt. So wird wiederum ein exaktes Schnittergebnis am Holm entlang erreicht. Der Holm welcher aufgeschoben wird hat mindestens einen Ring in seinem hohlen Zentrum, (Fig. 5 Nr. 20) welcher vom Innendurchmesser her genau auf den Trägerholm (Fig. 5 Nr.1) passt und wiederum mit einem rechteckigen Messer (Fig. 5 Nr.13), das für die Distanz und deren stabiler Haltung zwischen dem Trägerholm und dem aufgeschobenen Holm, welcher als Messer fungiert, verantwortlich ist.

Das Ziel der Ausführungsformen ist es das Messer exakt am Trägerholm entlang, ohne Abweichungen, durch das Lebensmittel zu drücken ggf. zu ziehen.

Der Trägerholm kann in der Ausführungsform mit dem länglich verlaufenden Schlitz außen, mindestens an einer Seite, vorzugsweise an mehreren Stellen, mit Widerhaken versehen sein, (Fig. 1 Nr. 4) welche sich also entgegen der Einführungsrichtung oder Durchbohrungsrichtung verdicken.

Nachdem das Messer mit der Zugvorrichtung durch das Lebensmittel gezogen wurde, kann das Messer mit der Zugvorrichtung, auf der anderen Seite des Lebensmittels, entfernt werden. Im Anschluß wird der Trägerholm, mit den Widerhaken, entgegen der Zugrichtung aus dem Lebensmittel gezogen, wodurch der ausgeschnittene Inhalt des Lebensmittels, durch die Widerhaken leichter am Trägerholm haftet und aus dem Lebensmittel entfernt werden kann, damit das gewünschte Ergebnis der Aushöhlung entsteht.

In der Ausführungsform, in welcher der Trägerholm ohne Schlitz ist, hohl, oder aus Vollmaterial und in welcher ein durchmessergrößerer Holm als Zugvorrichtung mit dem am Ende befestigten Messer auf den eigentlichen Trägerholm aufgeschoben wird, (Fig.4 Nr. 1, 18) können Widerhaken aus federndem Material (Fig.4 Nr. 4) am eigentlichen Trägerholm, welche beim Aufschieben des hohlen Holmes mit dem Messer, federgelagert in den eigentlichen Trägerholm abtauchen oder nur niedergedrückt werden, diese Erleichterung des Entfernen des ausgeschnittenen Materials übernehmen, indem sie sich nach Abziehen des hohlen Holmes aufrichten und als Haken fungieren.

Wurde in dieser Ausführungsform der Trägerholm mit seiner Spitze (Fig. 4 Nr. 16) zusammen mit der aufgeschobenen Zugvorrichtung durch das Lebensmittel geschoben, wird das Messer durch Ziehen an der aufgeschobenen Zugvorrichtung an welcher es befestigt ist, entlang des Trägerholmes durch das Lebensmittel gezogen und am anderen Ende vom Trägerholm abgezogen. Die Schlußplatte (Fig. 4 Nr. 22) welche von der Fläche her größer ist, als der vom Messer im Lebensmittel verursachte Ausschnitt, hält den Trägerholm beim Ziehen an der Zugvorrichtung stabil im Lebensmittel, damit er nicht mit durchgezogen wird. Die Befestigung der Trägerplatte kann in einer Ausführungsform analog (Fig. 1 Nr. 5, 6, 7, 8) erfolgen, nur dass die Nase der Deckplatte (Fig. 1 Nr.6) lediglich in eine Aussparung (Nr. 7) im Trägerholm paßt und durch Eindrehen arretiert wird.

Vorzugsweise jedoch, ist der Trägerholm in seiner gesamten Länge mit einem Schlitz versehen, in welchen das Zugwerkzeug, vorzugsweise das Edelstahlseil eingelegt wird. (Fig. 1)

Der Schlitz des Trägerholmes kann auch nur so dünn ausgeführt sein, dass er lediglich das eckige Messer im Verlauf des Schlitzes führt und die Zugvorrichtung nur in den Hohlraum des Trägerholmes eingeschoben wird, statt eingelegt. Hier läuft im Schlitz dann das eckige Messer und im Hohlraum des Trägerholms ein Körper im Zentrum des Messers, welcher der jeweiligen Ausführungsform des Trägerholmes (rund, eckig, dreieckig, oval) angepaßt ist. Dies bedeutet, dass der Schlitz eben in seiner Breite schmaler gehalten werden kann.

In einer weiteren Ausführungsform ist dieser Schlitz an mindestens einer kleinen Stelle hinsichtlich seiner Breite etwas vergrößert, damit eine Verdickung des Zugwerkzeuges dort eingelegt werden kann. Vorzugsweise gibt es derart im länglichen Verlauf des Schlitzes zwei oder drei derartige Vergrößerungen. (Fig. 1 Nr. 3, Fig. 2 Nr.10)

Die Verdickung(en) der Zugvorrichtung kann nach Einlegen, im restlichen, länglichen Verlauf des Schlitzes, beim Zugvorgang nicht mehr aus dem Schlitz des Trägerholmes springen, wodurch die ganze Zugvorrichtung stabilisiert wird.

Diese Maßnahme ist nötig, damit während des Zugvorganges am Seil oder in einer weiteren Ausführungsform, am eingelegten Zugwerkzeug (eines Drahtes oder einer dünnen Stange) das Zugwerkzeug im Holm gehalten wird und nicht herausspringt, um Verletzungen oder mißglückte Ergebnisse zu verhindern.

Es sind jedoch auch Ausführungsformen denkbar, bei welchen auf diese Führungsmaßnahme verzichtet wird und der Schlitz im Trägerholm durchgehend ohne vergrößerte Öffnungen ausgeführt ist und auch das Zugwerkzeug ohne Verdickungen ausgeführt ist.

In einer weiteren Ausführungsform hat der Trägerholm an einer Stelle, vorzugsweise mittig ein Gelenk, damit er zusammengeklappt und besser aufbewahrt werden kann.

Besteht die Zugvorrichtung aus einem Edelstahlseil ist dieses ohne Gelenk ausgeführt. Ist die Zugvorrichtung aus starrem Material, kann diese ebenfalls mit einem Gelenk versehen sein.

In der Ausführungsform in welcher ein hohler Holm mit dem Messer am Ende auf den eigentlichen Trägerholm aufgeschoben wird, (Fig. 4) können sowohl der eigentliche Trägerholm, als auch der Holm mit dem Messer, welcher auf den eigentlichen Trägerholm aufgeschoben wird, mit einem Gelenk versehen sein, damit die Gesamtvorrichtung zusammengeklappt werden kann.

An einem Ende des Zugwerkzeuges, vorzugsweise dem Edelstahlseil, dem Draht oder der dünnen Stange befindet sich eine kegelförmige Spitze, (Fig. 2, 7, 8 Nr. 9) wodurch das Lebensmittel mit dem Trägerholm leichter durchbohrt werden kann.

Das Zugwerkzeug weißt an mindestens einer Stelle in seinem länglichen Verlauf, vorzugsweise an 2-3 Stellen eine Verdickung in Form eines kurzen, kleinen Zylinders (Fig. 2 Nr. 10) oder einer Kugel auf, welche im Durchmesser minimal kleiner ist, als der Innendurchmesser des Trägerholmes, um in der mit einem Schlitz geöffneten Röhre des Trägerholmes beim Anziehen geführt werden zu können.

Diese Verdickungen passen auch beim Einlegen des Zugwerkzeuges in die Vergrößerungen des Schlitzes des Trägerholmes. (Fig. 1 Nr. 3)

Die Verdickungen der Zugvorrichtung sind der Hohlraum-Form des Trägerholmes angepaßt (rund, eckig, oval, dreieckig usw.) Vorzugsweise sind sie jedoch rund, zylinderförmig, vom Durchmesser minimal kleiner als der Innendurchmesser des Trägerholmes, um während des Ziehens der Zugvorrichtung einen exakten, stabilen Zugverlauf zu gewährleisten.

An einem Ende des Zugwerkzeuges, vorzugsweise dem Edelstahlseil, ist die vorzugsweise kreisrunde Klinge angebracht, welche jedoch wie beschrieben auch jede andere, beliebige Form aufweisen kann, welche sich zum Aushöhlen des Lebensmittels eignet. (Fig. 2. Nr. 11,12,13, Fig. 7 und 8 Nr. 11, 13)

Diese Klinge ist in einer weiteren Ausführungsform austauschbar, um sie zu erneuern wenn sie an Schärfe verliert oder falls ein anderer Durchmesser des im Lebensmittel zu entstehenden Hohlraumes gewünscht wird. Die Klinge kann also vorzugsweise im Durchmesser kleiner oder größer sein oder in anderen Ausführungsformen einfach eine andere Dimension haben.

Die Austauschbarkeit wird in einer Ausführungsform dadurch erreicht, dass die Zugvorrichtung eine Öse und das Messer einen Haken aufweist. Es kann jedoch auch dadurch gelöst werden, dass am Messer ein Innengewinde im zylindrischen Körper (Fig. 2 Nr.12) ist und an der Zugvorrichtung ein Außengewinde, welches dort eingedreht wird.

Am anderen Ende des Zugwerkzeuges, der Zugvorrichtung, vorzugsweise des Edelstahlseiles ist eine Kegelförmige Spitze angebracht, um das Durchbohren des Lebensmittels zu ermöglichen. Diese Kegelförmige Spitze kann eine Nase aufweisen, welche die Spitze in dem Schlitz des Tägerholmes während dem Durchbohren fixiert. (Fig. 2 Nr. 14) Desweiteren kann die Spitze vorzugsweise einen zylindrischen Teil aufweisen (Fig. 2 Nr. 15) welcher vom Durchmesser minimal kleiner ist, als der Durchmesser des Trägerholmes, damit die Spitze wiederum an Halt gewinnt, wenn sie auf den Trägerholm aufgesteckt wird. Die Spitze wird also durch den zylindrischen Körper im Trägerholmhohlraum und mit der Nase im Schlitz des Trägerholmes stabil gehalten, um sich während des Durchbohrens des Lebensmittels nicht zu verwinden.

Diese Spitze kann außer einer kegelförmigen Ausführung auch jede andere Form haben, welche das Durchbohren erleichtert, kann also auch flach, ähnlich einer altertümlichen Pfeilspitze ausgeführt sein. Die Spitze ist fest mit der Zugvorrichtung verbunden.

In Ausführungsformen, in welchen die Form des eigentlichen Trägerholmes von der runden, rohrförmigen Form abweicht, kann der zylindrische, stabilisierende Körper der Spitze nicht zylindrisch ausgeführt sein, sondern der jeweiligen Form der Ausführung des Trägerholm Hohlraumes angepaßt sein, wird jedoch vom seiner Dimension minimal geringer gehalten als der hohle Dimensionsraum des Trägerholmes (eckig, oval, dreieckig usw)

Es sind auch Ausführungsformen denkbar, in welchen auf die Spitze verzichtet werden kann. Es wird dann das Lebensmittel mit dem Trägerholm durchstoßen und die Zugvorrichtung durch einschieben eingeführt, bis sie am anderen Ende des Lebensmittels wieder herausragt. Mittels eines einfachen Ösensystems kann eine Zugerleichterung, z.B. ein Ring dort befestigt werden, um die Zugkraft leichter auf die Zugvorrichtung zu übertragen.

Das Messer ist vorzugsweise kreisrund ausgeführt - kann jedoch je nach gewünschtem Aushöhlungsergebnis von der kreisrunden Form abweichen, also eckig, oval, dreieckig) ausgeführt sein.

Das Messer ist in einem Stück gegossen und hat Innerhalb dieses Werkstückes dennoch drei wichtige Bestandteile: Bei der Ausführungsform mit dem rohrförmigen, runden, hohlen Trägerholm einen zylindrischen Körper, welcher vom Durchmesser her minimal geringer ausgeführt ist, als der Innendurchmesser des Trägerholmes in welchen er bestimmungsgemäß eingeführt wird und von der seiner Länge her so lang ist, dass ein Kippen des Messers im Hohlraum des Trägerholmes, beim Durchzugsvorgang, ausgeschlossen ist. (Fig. 3 Nr. 12) Ein eckiges Messer (Fig. 3, 7, 8 Nr. 13) welches am Zylindrischen Körper anschließt und nach dem Einlegen oder Einschieben in den Trägerholm im Schlitz des Trägerholmes (Fig. 1, 6, 7, 8 Nr. 2) läuft, sowie die kreisrunde Klinge (Fig. 3, 7, 8 Nr. 11) welche sich an die eckige Klinge anschließt. Durch diese Bestandteile wird eine stabile Einheit der Klinge erreicht.

In anderen Ausführungsformen ist der zylindrische Körper des Messers anders geformt und paßt sich der jeweiligen Hohlraumform der entsprechenden Ausführungsform, des Trägerholmes an.

Das Messer ist also vorzugsweise kreisrund ausgeführt. Die Verbindung zwischen Zugvorrichtung und Messer kann mittels eines einfachen Einhakens erfolgen (Öse + Haken) erfolgen oder wie beschrieben mit einer Gewindeverbindung gelöst werden.

Die Zugvorrichtung, vorzugsweise ein Edelstahlseil, wird in den Trägerholm eingelegt, die Spitze, welche mit der Zugvorrichtung fest verbunden sein kann, wird in den Trägerholm eingeschoben und durch die Nase und zylindrische Führung im Holm fixiert. Der Trägerholm wird mit der nun beinhalteten, durch den Schlitz eingelegten, oder in den Hohlraum eingeschobenen Zugvorrichtung, mit der Spitze voraus, durch das Lebensmittel geschoben und kommt am anderen Ende des Lebensmittels heraus. Durch leichtes Ziehen an der Spitze wird die Klinge, welche an der Zugvorrichtung, vorzugsweise dem Edelstahlseil, befestigt wurde (eingehakt, eingeschraubt) und sich am anderen Ende befindet, mit ihrem zylindrischen Körper so in das andere Ende des Trägerholmes gezogen, dass das eckige Messer der Klinge (Fig. 3, 7, 8 Nr. 13) im Schlitz des Trägerholmes (Fig. 1, 6, 7, 8 Nr. 2) läuft und der zylindrische Körper (Fig. 3. Nr. 12) im Trägerholm. Durch die so erreichte Fixierung läuft das Messer während dem Durchziehen exakt im Verlauf des Trägerholmes durch das Lebensmittel, auch in der Ausführungsform, in welcher der Trägerholm biegsam ist. Hier ist dann auch die Zugvorrichtung flexibel, ähnlich einem Draht oder Stahlseil.

Die Klingen des Messers in allen Ausführungsformen, auch die eckige stabilisierende Klinge sind mindestens in Zugrichtung durch das Lebensmittel geschärft.

Sollte der Trägerholm nicht rund sein, also wie ein Rohr, sondern rechteckig, kann der zylindrische Körper des Messers der genannten Ausführung auch rechteckig sein, so dass er wiederum mit wenig Spielraum in dem Hohlraum des Trägerholmes paßt und während dem Zugvorgang an der Zugvorrichtung im Hohlraum gleiten kann und das Messer im Verlauf wiederum stabilisiert.

Das Messer ist am einen Ende der Zugvorrichtung befestigt. In einer weiteren Ausführungsform kann diese Befestigung auch gelöst werden (Haken, Öse, Innengewinde am zylindrischen Körper des Messer und Außengewinde an der Zugvorrichtung usw.) so dass das Messer auswechselbar ist, falls es stumpf wurde, oder eine kleinere bzw. größere Dimension oder eine andere Form, benötigt wird.

Im Endergebnis wird die Zugvorrichtung, vorzugsweise das Edelstahlseil, in den Schlitz des Trägerholmes eingelegt, die kegelförmige Spitze wie beschrieben fixiert. Das Lebensmittel wird nun mit dieser Verbindung durchbohrt. Durch ziehen an der nun herausragenden, kegelförmigen Spitze wird durch die Zugkraft, das Zugwerkzeug, vorzugsweise das Edelstahlseil mit dem sich am anderen Ende befindlichen Messers, welches in dem Kanal des Trägerholmes geführt wird, ohne mögliche Abweichungen, entlang des Verlaufes des Trägerholmes durch das Lebensmittel gezogen. Indem das Seil nun ganz durchgezogen wird, kann das Messer über den Schlitz und die Öffnung des Trägerholmes, aus dem Trägerholm herausgezogen werden.

Der Trägerholm mit seinen Widerhaken (Fig. 1 Nr. 1,4) wird nun in die andere Richtung aus dem Lebensmittel gezogen. Hierdurch wird der herausgeschnittene Inhalt des Lebensmittels, welcher sich am Trägerholm befindet, entfernt, womit das Ergebnis entstanden ist, welches der Form der verwendeten Klinge entspricht.

Nun kann das Lebensmittel mit wunschgemäßen Inhalten gefüllt werden. Der herausgezogene Inhalt wird gegebenenfalls weiterverarbeitet, möglicherweise zum Verschließen der beiden entstandenen Öffnungen des Lebensmittels verwendet, nachdem es vorstellungsgemäß gefüllt wurde.

Die komplette Vorrichtung kann aus jedem beliebigem Material gefertigt sein, welches die Voraussetzungen erfüllt und das gewünschte Ergebnis herbeibringt. Auch eine Ausführung komplett aus Kunststoff oder in Teilen aus Kunststoff kombiniert mit Stahl ist denkbar und ausführbar. Für biegsame Ausführungsformen bietet sich Aluminium an.

Auf den Trägerholm wird am Ende eine Schlußplatte (Fig.1 Nr.5) aufgesteckt und z.B. dadurch gehalten, dass der Trägerholm rund ist, ein zylindrischer Teil der Schlußplatte ( Fig. 1 Nr.8) vom Innendurchmesser minimal größer als der Außendurchmesser des Trägerholmes, auf den Trägerholm aufgesteckt wird und durch eine leichte Drehung mit einer Nase (Fig. 1.Nr.6) im zylindrischen Körper, (Fig. 1 Nr. 8) welche genau beim Schlitz des Trägerholmes beim Aufstecken eingeführt wird, in einer Nut des Trägerholmes durch leichte Drehung einrastet, (Fig. 1 Nr.7) damit die Schlußplatte nicht nach hinten abfallen kann.

Durch diese Maßnahme wird erreicht, dass der Trägerholm während des Ziehens an der Zugvorrichtung und dem Arbeitsschritt, welchen das Messer verrichtet, im Lebensmittel gehalten wird, also nicht mit durchgezogen wird, da der Durchmesser der Schlußplatte größer ist als der Durchmesser des Messers.

Der Trägerholm kann aus jedem, geeigneten Material gefertigt sein. Es bietet sich Edelstahl, Aluminium, Kunststoff oder auch Keramik an. Es sind auch Ausführungen ohne Verdickung oder Vergrößerung des durchgängigen Schlitzes in Form von Aussparungen im Trägerholm vorgesehen und möglich.

Die Verdickungen im Schlitz des Trägerholmes werden dann nötig, wenn die Zugvorrichtung aus einem dünnen Edelstahlseil besteht, dessen Durchmesser dünner ist als der Schlitz des Trägerholmes. Dann weist auch das Edelstahlseil entsprechende Verdickungen auf, welche minimal kleiner sind als die Aussparungen im Trägerholm. Das Seil kann dann, wenn es passend mit den Verdickungen in die Aussparungen des Trägerholmes eingelegt wird, beim Durchzugvorgang insbesondere bei Ausführungen mit einem gebogenen Trägerholm nicht aus der Führung, genauer aus dem Schlitz des Trägerholmes herausspringen, sondern bleibt, gehalten durch die Verdickungen, im Hohlraum des Trägerholmes.

In Ausführungsformen des Trägerholmes mit einem durchgängigen, gleichbreiten Schlitz ohne Verdickungen oder genauer Aussparungen, kann die Zugvorrichtung mit dem Messer, wie bereits beschrieben, auch in den Hohlraum des Trägerholmes eingeschoben werden. Sie wird dann also nicht über den Schlitz des Trägerholmes eingelegt. Die Zugvorrichtung ist dann nicht als Seil sondern als Stange ausgeführt (Fig. 7 Nr. 22). Das eckige Messer läuft dann nach Einschieben im Schlitz des Trägerholmes, (Fig. 6, 7, 8 Nr. 2) die Zugvorrichtung mit dem zylindrischen Teil des Messers läuft im Hohlraum des Trägerholmes. Das Messer, welches von der Dimension her dem gewünschten Aushöhlergebnis entspricht, sei es also kreisrund oder anders geformt, läuft dann, nachdem das Lebensmittel mit der Spitze an der Zugvorrichtung voraus, durchstoßen wurde, durch Ziehen an der Spitze, geführt durch den Trägerholm, sowie seiner Verbindung mit dem eckigen Messer, der Zugvorrichtung und/oder dem zylindrischen Körper, exakt abstands-haltend außen entlang des Trägerholmes durch das jeweilige Lebensmittel.

Die Zugvorrichtung kann auch ohne Verdickungen ausgeführt sein und aus einer länglichen Stange bestehen. (Fig. 7 Nr. 22) Diese Stange kann wiederum aus beliebigen, geeigneten Materialien gefertigt sein. Es bietet sich Edelstahl, Aluminium, Kunststoff oder Keramik an. Diese Stange ist in einer weiteren Ausführungsform mit einem Gewinde an ihrem vorderen und hinteren Ende versehen, um vorne eine Spitze und hinten ein Messer aufzunehmen. Zu diesem Zweck wird die Stange mit Außengewinden versehen, Messer und Spitze mit einem passenden Innengewinde oder umgekehrt. Sowohl die Spitze als auch das Messer sind dann auswechselbar. Das Gewinde des Messers befindet sich dann zentral im zylindrischen Körper des Messers. Das Gewinde der Spitze zentral gegenüberliegend der eigentlichen Spitze, also im hinteren nicht spitzen Teil. Diese Maßnahme erleichtert den Tausch stumpf gewordener Messer oder Spitzen. Die Zugvorrichtung kann wenn sie in Form eines Edelstahlseiles ausgeführt ist, über den Schlitz in den Trägerholm eingelegt werden. In Ausführungsformen, in welchen die Zugvorrichtung eine Stange darstellt kann diese in den Hohlraum des Trägerholmes eingeschoben werden. Da der Trägerholm beidseitig wie ein Rohr geöffnet ist und auch der Schlitz durchgehend ausgeführt ist, kann das Einschieben der Zugvorrichtung mit dem Messer von beiden Seiten erfolgen, bevor man das Lebensmittel durchstößt. Führt man das Messer zuerst in den Schlitz kann die Spitze bereits an der Zugvorrichtung sein. Führt man die Zugvorrichtung zuerst ein, wird die Spitze natürlich erst aufgedreht, wenn die Zugvorrichtung vorne aus dem Trägerholm ragt. Sollte die Stange vom Durchmesser her dünner sein als der Schlitz im Trägerholm, ist auch ein Einlegen über den Schlitz des Trägerholmes möglich.

Das eckige Messer (Fig. 2, 7, 8, Nr. 13) kann außer einer eckigen Form auch jede andere Form haben, welche von seiner Breite her im Schlitz des Trägerholmes laufen kann und das außen am Trägerholm laufende Messer ausreichend stabilisiert.

In einer weiteren Ausführungsform werden Zugvorrichtung, Messer und Spitze in einer einzigen Form als Einheit im Spritzgussverfahren oder durch Verschweißen hergestellt.

Das Messer muss nicht aus einem Stück gegossen sein, sondern kann auch in Einzelteilen miteinander verbunden sein. Dies kann durch Schweißtechnik geschehen.

Die Aufgabe des zylindrischen Körpers des Messers, nämlich das Messer im Hohlraum des Trägerholmes, durch einen minimal geringeren Außendurchmesser des zylindrischen Körpers gegenüber dem Innendurchmesser des Trägerholmes, stabil zu führen, kann in einer weiteren Ausführung auch die Zugvorrichtung an sich wahrnehmen, wenn diese als Stange ausgeführt ist welche wiederum nur einen minimal geringeren Außendurchmesser hat, als der Trägerholm Innendurchmesser. Dann ist das eckige Messer durch gesamten Guss oder Verschweißen mit der Zugvorrichtung verbunden, die im Hohlraum des Trägerholmes läuft. Das eckige Messer wird wie beschrieben beim Durchzug durch das Lebensmittel im Schlitz des Trägerholmes geführt und hält dabei wie beschrieben das Messer, durch welches das gewünschte Aushöhlergebnis entsteht, sei es nun kreisrund oder in einer anderen Form ausgeführt, welches außen, exakt abstandhaltend, während dem Durchziehen am Trägerholm verläuft.

Für die Materialien, aus welchem das Messer gefertigt ist, bietet sich Edelstahl, Keramik oder Kunststoff an. Es kann natürlich auch anderen, geeigneten Materialien ausgeführt sein.

Die Messer sind messerüblich in Durchzugsrichtung geschärft.

Das Messer kann in seiner jeweiligen Dimension in Schärferichtung mit Zähnen versehen sein, welche an allen Seiten scharf sind, so dass auch weichere Lebensmittel bearbeitet werden können, ohne dass das Aushöhlergebnis durch den Druck, welchen eine vollflächige Schneide, oder genauer die Klinge, ohne spitze Zähne beim Ziehen auf das Lebensmittel ausübt beeinträchtigt wird. Es werden dann auch Lebensmittel wie Fleisch, Kastenkuchen und viele andere konsistenzähnliche Produkte mit dem Werkzeug zu bearbeiten sein. Eine vollflächig auf bestimmte Lebensmittel auftreffende Klinge komprimiert dass das Lebensmittel beim Durchzug und das Ergebnis wird gequetscht und gerissen. Dies wird durch sehr spitze längere Zahnung der Klinge verhindert.

Um das Entfernen der Aushöhlergebnisse aus dem Lebensmittel zu erleichtern kann in einer Ausführungsform eine Art Beilagscheibe, welche in etwa der Dimension des Messers, welches außen am Trägerholm verläuft, entspricht, nachdem das Messer mit der Zugvorrichtung nach dem Durchziehen durch das Lebensmittel aus dem im Lebensmittel verbliebenen Trägerholm gezogen wurde, auf den Trägerholm aufgebracht werden. Diese Verbindung wird in einer Ausführungsform durch ein Außengewinde am Trägerholm und ein Innengewinde im Loch der Scheibe gelöst.

Wird diese Einheit aus Scheibe und Trägerholm nun nach hinten aus dem Lebensmittel gezogen, bildet die Scheibe eine Druckfläche, welche beim Zug Druck auf das Aushöhlergebnis, also auf den Ausschnitt im Lebensmittel drückt. Die Zugkraft kann so also besser auf den Ausschnitt übertragen werden. Der Ausschnitt wird herausgezogen.

Um während des Durchzuges der Zugvorrichtung mit dem Messer durch das Lebensmittel, die Hand des Nutzers zu schützen, wenn das Messer am Ende des Lebensmittels herauskommt, wird, nachdem das Lebensmittel mit der Vorrichtung, dem Werkzeug, anwendungsgemäß durchstoßen wurde, vor dem Ziehen an der Spitze, eine Kunststoffscheibe mit einem mittigen Loch, welche von ihrem Durchmesser größer ist, als die jeweilige Dimension des Messers auf das Werkzeug, die Vorrichtung geschoben. Nun kann man mit einer Hand den aus dem Lebensmittel ragenden Teil der Vorrichtung, so dass die Scheibe direkt am Lebensmittel anliegt, am Trägerholm fassen und mit der anderen Hand an der Spitze die Zugvorrichtung mit dem Messer durch das Lebensmittel ziehen, bis das Messer an der Kunststoffscheibe anschlägt, wenn es komplett durchgezogen wurde. Dieser Schutz ermöglicht auch ein schnelles Ziehen, ohne sich durch die Klinge zu verletzen. Diese Scheibe kann auch aus anderen Materialen als Kunststoff ausgeführt sein. In einer weiteren Form kann die Scheibe auch eine U-Form haben und nicht aufgeschoben sondern nur über den Holm gelegt werden, da dies schneller geht.

Das Ziehen an der Spitze kann in einer Ausführungsform dadurch erleichtert werden, dass die Spitze ein durchgängiges Loch aufweist im rechten Winkel zur eigentlichen Spitze. Nachdem das Lebensmittel durchbohrt wurde, kann man nun durch dieses Loch einen Zugring, welchen man mit einem Finger greift und daran die Zugvorrichtung durch das Lebensmittel zieht, führen.

In einer weiteren Ausführungsform kann hinter dem Messer eine exakt der Dimension des Messers entsprechende Hülse in das Lebensmittel gezogen werden.
Dies ermöglicht es, in einem Arbeitsschritt, das Messer durch das Lebensmittel zu ziehen und die am Messer befestigte Hülse exakt in den Ausschnitt des Messers im Lebensmittel zu führen. Die Hülse wird also dem Messer unmittelbar hinterhergezogen. Die Hülse wird nun mit dem jeweiligen Lebensmittel befüllt. Man kann so bei Verwendung von Hülsen aus Hartweizengries oder anderer Stärke eine mit dem jeweiligen Lebensmittel befüllte Hülse erhalten.

Die Verbindung von Messer und Hülse wird in einer Ausführungsform dadurch er- ' reicht, dass das Messer an seinem Ende, also der scharfen, schneidenden Seite gegenüberliegend, Nuten in Form von Aussparungen bis hin zu durchgehenden Löchern aufweist. Ebenso müssen die Hülsen diese Nuten oder Löcher am Rand der Hülse aufweisen. Die feste Verbindung zwischen Messer und Hülse wird über ein der Dimension des Messers entsprechendes, dünnes Federblech erreicht, welches etwa 5 cm lang ist. Über diese Länge weist das Federbleich einen Schlitz durchgehend auf. Im Falle eines kreisrunden Messers ist dieses Federblech ebenfalls kreisrund gebogen und länglich wie ein Rohr. Der Schlitz ist so breit, dass beim Zusammendrücken des Federbleches ausreichend Spannung entstehen kann und dass das Federblech innen in das in einer Ausführungsform kreisrunde Messer eingeschoben werden kann. Das Federblech weißt an den Stellen, an welchen das Messer die Nuten oder Löcher hat, Stanzmarken oder Erhebungen auf, welche dann in den Nuten oder Löchern des Messers einrasten, wenn das Federblech nicht mehr durch Fingerdruck komprimiert wird. Ebenso hat das Federblech an seinem anderen Ende diese Stanzmarken oder Erhebungen, welche auf die gleiche Weise in der Hülse einrasten, welche hier kreisrund in derselben Dimension des Messers beschaffen ist. Messer und Hülse sind nun über das Federblech, welches sich im Hohlraum, oder Innenraum des Messers und der Hülse befindet, durch die entstehe Spannung des nicht mehr komprimierten Federbleches verbunden, um beim Durch- oder Einzug in das Lebensmittel auch verbunden zu bleiben. Das rechteckige Messer welches später im Schlitz des Trägerholmes läuft stört dabei nicht, da es sich im Schlitz des Federbleches befindet muss. Die Hülse wird ebenso wie das Messer außen am Trägerholm durch oder in das Lebensmittel geführt. Die Hülse muss hier exakt der Dimension des Messers, welchem sie folgt entsprechen. Insbesondere ist dies bei eher weicheren Lebensmitteln möglich.

Mit diesem Werkzeug wird ein Verfahren ermöglicht, viele Lebensmittelarten, insbesondere Gemüse, Obst, Würste, über ihre gesamte Dimension oder ihren gesamten länglichen Verlauf, auszuhöhlen, beliebig mit anderen Lebensmitteln zu befüllen oder auch die jeweiligen, ausgehöhlten Inhalte zu verwenden, um die ausgehöhlten Lebensmittel gegeneinander damit zu befüllen.

Dieses Verfahren stützt sich während dem Durchziehen durch das Lebensmittel auf einen trägerholmgeführten Messerverlauf. Hierzu wird die Zugvorrichtung mit dem Messer in den Trägerholm eingeschoben, so dass das eckige Messer im Schlitz des Trägerholmes läuft. Da der Trägerholm an seinen beiden Enden offen ist, kann das Einschieben von beiden Seiten erfolgen, da die Spitze in einer Ausführungsform lösbar ist und auch nach dem Einführen wie beschrieben angebracht werden kann. Mit der Spitze voraus wird nun das Lebensmittel durchstoßen. Das Messer läuft durch die Trägerholmführung, durch Ziehen an der Spitze, mit der Zugvorrichtung exakt im Verlauf des Trägerholmes, durch das jeweilige Lebensmittel. Das Ziehen an der Spitze wird in einer Ausführungsform dadurch erleichtert, dass die Spitze quer, also 90 Grad zur Durchschieberichtung ein Loch aufweist, durch welches ein Zugring eingehakt wird. Das Messer kann nach dem Durchstoßen des Lebensmittels über die Zugvorrichtung, zusammen mit der Zugvorrichtung am anderen Ende des Trägerholmes herausgezogen werden, während der Trägerholm im Lebensmittel verbleibt. Nun kann man das gewünschte, der Dimension des Messers entsprechende Aushöhlergebnis mit dem Trägerholm entfernen.

Es bietet sich jedoch auch die weitere spannende Möglichkeit die herausgezogene Zugvorrichtung mit einem Messer einer anderen Dimension zu versehen, während das erste Aushöhlergebnis und der Trägerholm im Lebensmittel verbleiben. Die Zugvorrichtung wird nun ohne die Spitze in den Trägerholm eingeschoben und nachdem sie am anderen Ende des Holmes herausragt, mit dem Messer einer anderen Dimension, mit welchem die Zugvorrichtung versehen wurde, erneut durch das Lebensmittel gezogen. Hierzu kann man die Spitze wieder aufdrehen und den Zugring verwenden. Das Ergebnis sind hier dann zwei verschiedene Aushöhlergebnisse übereinanderliegend in einem Lebensmittel. Es entstehen dadurch aufregende Aushöhlergebnisse, welche man wieder beliebig mit Aushöhlergebnissen aus anderen Lebensmitteln befüllen kann. Man kreiert dadurch mühelos eine Zucchini mit Inhalten aus Wurst, Gurke oder Kartoffel. Ist nun ein Messer einer anderen Dimension auch nicht nur kreisrund sondern stern- oder wellenförmig, entstehen absolut kreative Ergebnisse.

In einer weiteren Ausführungsform bietet sich wie beschrieben auch die Möglichkeit an, hinter dem Messer eine Hülse aus Lebensmittelstärke oder Hartweizengries in das Lebensmittel zu ziehen und dadurch die Hülse mit dem Aushöhlergebnis des Messers zu füllen.

### Erklärung der Figuren:

**Figur 1**
   Nr. 1
      zeigt den Trägerholm
   Nr. 2
      zeigt den Schlitz im Trägerholm, in welchem später das rechteckige Messer der eingelegten Klingeneinheit läuft
   Nr. 3
      zeigt die Vergrößerungen des Schlitzes im Trägerholm, in welche die Verdickungen der Zugvorrichtung eingelegt werden können, um die Zugvorrichtung im Hohlraum sicher zu führen.
   Nr. 4
      zeigt die Widerhaken am Trägerholm, um den durch das Messer ausgehöhlten ereich des Lebensmittels leichter aus dem Lebensmittel entfernen zu können, in dem der Trägerholm entgegen dem Widerhakenverlauf aus dem Lebensmittel gezogen wird
   Nr. 5
      zeigt die Schlußplatte welche auf den Trägerholm aufgesteckt werden kann
   Nr.6
      zeigt die Nase, welche beim Aufstecken auf den Trägerholm in den Schlitz des Trägerholmes (Fig. 1 Nr. 2) eingeführt wird und durch leichtes Drehen in der Nut des Schlitzes vom Trägerholm (Fig. 1 Nr.7) an Halt gewinnt.
   Nr. 7
      zeigt die Nut im Schlitz des Trägerholmes, in welchen die Nase der Schlußplatte, nach dem Aufstecken der Schlußplatte eingedreht wird
   Nr. 8
      zeigt den zylindrischen Körper der Schlußplatte, vom Innendurchmesser her minimal größer als der Außendurchmesser des Trägerholmes, damit beim Aufstecken schon ein gewisser Halt erfolgt
**Figur 2**
   Zeigt eine Ausführungsform der Zugvorrichtung
   Nr. 9
      Zeigt die kegelförmige Spitze der Zugvorrichtung
   Nr. 10
      zeigt die Verdickungen der Zugvorrichtung, welche in die Vergrößerungen des Trägerholmes passen, um einen stabilen Verlauf der Zugvorrichtung beim Zugvorgang im Trägerholm zu gewährleisten.
   Nr. 11
      zeigt die kreisrunde Ausführungsform des Messers
   Nr. 12
      Zeigt den zylindrischen Teil des Messers, der Klinge, welcher im Hohlraum des Trägerholmes läuft, um ein Kippen des Messers bzw. der Klinge beim Zugvorgang zu verhindern.
   Nr. 13
      Zeigt das rechteckige Messer, welches den zylindrischen Teil der Klinge mit dem kreisrunden Teil der Klinge fest verbindet und welches im Schlitz des Trägerholmes (Fig. 1 Nr. 2) während dem Durchzugsvorgang durch das Lebensmittel läuft
   Nr. 14
      zeigt eine Nase, welche auf einem zylindrischen Körper sitzt und beim Einschieben in den Schlitz des Trägerholmes (Fig. 1.Nr. 2) paßt und so die Spitze im Trägerholm stabilisiert.
   Nr. 15
      zeigt den zylindrischen Teil der kegelförmigen Spitze, dessen Außendurchmesser minimal kleiner ist als der Innendurchmesser des Trägerholmes, so dass er mit einer gewissen stabilisierenden Wirkung in den Trägerholm eingeschoben werden kann
**Figur 3**
   Nr. 12
      zeigt den zylindrischen Teil der Klinge (auch Fig. 2 Nr. 12) aus einer Draufsicht
   Nr.11
      zeigt die kreisrunde Klinge aus einer Draufsicht (auch Fig. 2. Nr.11)
   Nr.13
      Zeigt das rechteckige Messer aus einer Draufsicht (auch Fig. 2. Nr. 13)
   Nr. 12
      zeigt den zylindrischen Teil der Klinge leicht seitlich (auch Fig. 2. Nr. 12 und Fig. 3 Nr. 12)
   Nr. 13
      zeigt das rechteckige Messer der Klinge leicht seitlich (auch Fig. 2 Nr. 13 und Fig. 3 Nr. 13)
   Nr. 11
      zeigt die kreisrunde Klinge leicht seitlich (auch Fig. 2. Nr. 11 und Fig. 3 Nr. 11)
**Figur 4**
   Zeigt die Ausführungsform, in welcher die Zugvorrichtung mit dem Messer auf den Trägerholm aufgeschoben werden kann
   Nr. 1
      zeigt den Trägerholm selbst
   Nr. 16
      Zeigt die Spitze des Trägerholmes zum leichteren Durchbohren des Lebensmittels
   Nr. 4
      zeigt die in dieser Ausführungsform federnden Widerhaken, welche nach dem Aufschieben der Zugvorrichtung niedergedrückt oder eingedrückt werden
   Nr. 17
      zeigt den hohlen Raum des Holmes, welcher als Zugvorrichtung an sich fungiert und an welchem die Klinge befestigt ist
   Nr. 13
      zeigt das rechteckige Messer, welches den Holm als Zugvorrichtung (Fig. 4. Nr. 18) und die kreisrunde Klinge (Fig. 4. Nr.11) fest verbindet
   Nr. 11
      zeigt die kreisrunde Klinge
   Nr. 18
      zeigt den hohlen Holm welcher auf den Trägerholm aufgeschoben wird und welcher als Zugvorrichtung fungiert
   Nr. 22
      zeigt eine Abschlußplatte, welche mit dem Holm (Nr.1) fest verbunden sein kann
**Figur 5**
   Zeigt die Ausführungsform des Werkzeuges, in welchem der auf den Trägerholm aufgeschobene Holm in seiner Gesamtheit das Messer / die Klinge darstellt, in dem er in Durchschiebungsrichtung vorne (Fig 5 Nr. 21) geschärft ist
   Nr. 1
      Zeigt den Trägerholm auf welchen der Holm der das Messer darstellt aufgeschoben wird
   Nr. 19
      zeigt den hohlen Holm als gesamtes Messer, welcher auf den Trägerholm aufgeschoben wird
   Nr. 20
      Zeigt eine kreisrunde Führung, welche vom Innendurchmesser minimal größer ist, als der Außendurchmesser des Trägerholmes (Fig. 5. Nr. 1), um einen exakten Verlauf des aufgeschobenen Holmes zu gewährleisten
   Nr. 13
      Zeigt ein rechteckiges Messer, welches die kreisrunde Führung mit dem Holm, welcher auf den Trägerholm aufgeschoben wird, verbindet, um eine stabile Einheit herzustellen mit dem Ergebnis, dass der Abstand zwischen Trägerholm und aufgeschobenen Holm an jeder Position gleich ist.
**Figur 6**
   Zeigt eine Vergrößerung des Trägerholmes in einer rohrförmigen, länglichen Ausführungsform
   Nr. 1
      zeigt den Trägerholm
   Nr. 2
      Zeigt den durchgängigen Schlitz im Trägerholm, in welchem das eckige Messer läuft
**Figur 7**
   Zeigt die Vorrichtung, das Werkzeug zum Aushöhlen von Lebensmitteln in einer Ausführungsform mit länglichem, rohrähnlichem Trägerholm und einer Zugvorrichtung in Form einer Stange. Bei dieser Figur ist das Messer der Darstellung wegen zu etwa einem Drittel mit der Zugvorrichtung in den Trägerholm eingezogen. Dadurch ragt die Zugvorrichtung Nr. 22 mit der Spitze auch etwa ein Drittel aus dem Trägerholm heraus. In dieser eingezogenen Darstellung kann die Technik klarer gezeigt werden. Die Spitze Nr. 9 ragt mit der Zugvorrichtung in Stangenform Nr. 22 aus dem Trägerholm Nr. 1 heraus. Das kreisförmige Messer Nr. 11, welches beim Durchzug außen am Trägerholm läuft und für das Aushöhlergebnis sorgt, wird durch das eckige Messer Nr. 13, welches im Schlitz Nr. 2 des Trägerholmes läuft, stabil gehalten. Dieses eckige Messer ist in der Ausführungsform in welcher das Messer austauschbar ist, mit einem, bei dieser rohrähnlichen Ausführung, zylindrischen Körper, welcher im Hohlraum des Trägerholmes läuft, verbunden. Dieser Körper ist bei der Figur nicht zeichnerisch darstellbar. In einer anderen Ausführungsform stehlt die Zugvorrichtung diesen Körper dar, dann ist das eckige Messer mit der Zugvorrichtung fest verbunden.
   Nr. 1
      zeigt den Trägerholm
   Nr. 9
      Zeigt die Spitze welche in einer Ausführungsform fest mit der Zugvorrichtung verbunden ist, oder in einer anderen Ausführungsform austauschbar mit einer Gewindelösung mit der Zugvorrichtung verbunden ist
   Nr. 22
      Zeigt die Zugvorrichtung in Stangenform
   Nr. 11
      Zeigt das in dieser Ausführungsform kreisrunde Messer, welches in anderen Ausführungen eine andere, als kreisrunde Dimension haben kann
   Nr. 13
      Zeigt das eckige Messer
   Nr. 2
      Zeigt den Schlitz des Trägerholmes
**Figur 8**
   Zeigt die Vorrichtung/das Werkzeug zum Aushöhlen von Lebensmitteln, wobei diese Darstellung das Werkzeug zeigt - es fehlt allerdings die Schlußplatte Fig. 1 Nr. 5 - so wie man es zum Durchstoßen eines Lebensmittels einsetzen kann. Die Spitze Nr. 9 liegt befestigt an der Zugvorrichtung in Stangenform am Trägerholm Nr. 1 an, das bei dieser Darstellung kreisrunde Messer Nr. 11 liegt stabilisiert durch das eckige Messer Nr. 13, exakt abstandshaltend am Trägerholm. Das eckige Messer ist wie beschrieben entweder mit der Zugvorrichtung in Stangenform, welche als zylindrischer Körper fungiert, der im Hohlraum des Trägerholmes läuft, oder mit einem zylindrischen Körper, welcher mit dem kreisrunden und dem eckigen Messer eine Einheit bildet und in ablösbarer Ausführung mit der Zugvorrichtung durch ein Gewinde verbunden. Das in dieser Ausführungsform kreisrunde Messer kann, nachdem das Lebensmittel mit der Vorrichtung durchstoßen wurde, nur exakt trägerholmgeführt durch das Lebensmittel laufen, wenn die Zugvorrichtung an der Spitze mit dem Messer am anderen Ende durch den Trägerholm aus dem Lebensmittel gezogen wurde.
   Nr. 2
      Zeigt den durchgängigen Schlitz im Trägerholm
   Nr. 13
      Zeigt das eckige Messer
   Nr. 11
      Zeigt das kreisrunde Messer
   Nr. 1
      zeigt den Trägerholm
   Nr. 9
      Zeigt die Spitze

## Patentansprüche

1. Werkzeug zum Aushöhlen von Lebensmitteln, umfassend: einen Trägerholm (1), einer Zugvorrichtung, einem Messer (11, 12, 13), einer Spitze (9), wobei der Trägerholm (1) länglich ist und die Zugvorrichtung aufnimmt, an welcher das Messer (11, 12, 13) befestigt ist, welches während dem Durchziehen durch das Lebensmittel mit der Zugvorrichtung, im oder am Trägerholm (1) geführt wird, um ein Schnittergebnis im Lebensmittel zu erhalten, das dem Verlauf des Trägerholmes (1) entspricht und dessen Form dem gewünschten Aushöhlungsergebnis angepaßt ist, wobei sich am Ende der Zugvorrichtung, gegenüberliegend dem Messer (11, 12, 13), die Spitze (9) befindet, welche das Durchbohren des Lebensmittels mit dem Trägerholm (1) und der Zugvorrichtung erleichtert.

2. Werkzeug zum Aushöhlen von Lebensmitteln nach Anspruch 1, **dadurch gekennzeichnet, dass** eine Schlußplatte (5) am Ende des Trägerholmes (1) aufgesteckt und befestigt ist, welche das Einrutschen des Trägerholmes (1) in das Lebensmittel beim Durchziehen verhindert.

3. Werkzeug zum Aushöhlen von Lebensmitteln nach Anspruch 1 oder 2, **dadurch gekennzeichnet, dass** der Trägerholm (1) in seinem länglichen Verlauf innen hohl ist und einen Schlitz (2) aufweist über welchen die Zugvorrichtung in den Trägerholm (1) eingelegt wird.

4. Werkzeug zum Aushöhlen von Lebensmitteln nach Anspruch 3, **dadurch gekennzeichnet, dass** der längliche Schlitz (2) im hohlen Trägerholm (1), in welchen die Zugvorrichtung eingelegt wird, an mindestens einer Stelle eine Vergrößerung/Verbreiterung (3) aufweist um die Verdickung (10) der Zugvorrichtung in sich aufzunehmen, wobei sich die Verdickung (10) der Zugvorrichtung der Hohlform des Trägerholmes (1), jedoch mit einem minimal geringeren Durchmesser als dem Innendurchmesser des Trägerholmes (1) anpaßt und der Trägerholm (1) aus einem biegsamen Material gefertigt ist, um ihn der Form des Lebensmittels anzupassen sowie in dieser Form zu halten.

5. Werkzeug zum Aushöhlen von Lebensmitteln nach einem der vorherigen Ansprüche, **dadurch gekennzeichnet, dass** der Trägerholm (1) die längliche Form eines Rohres hat und mit mindestens einem Widerhaken (4) versehen ist.

6. Werkzeug zum Aushöhlen von Lebensmitteln nach Anspruch 4 **dadurch gekennzeichnet, dass** die Zugvorrichtung an mindestens einer Stelle die Verdickung (10) aufweist, welche in die Vergrößerung des Schlitzes (2) des Trägerholmes (1) eingelegt ist, um den stabilen Verlauf der Zugvorrichtung im Hohlraum des Trägerholmes (1) zu gewährleisten und welche vorzugsweise zylindrisch und mit einem minimal geringerem Durchmesser als dem Innendurchmesser des Trägerholmes (1) ausgeführt ist.

7. Werkzeug zum Aushöhlen von Lebensmitteln nach einem der vorherigen Ansprüche, **dadurch gekennzeichnet, dass** die Zugvorrichtung aus einem flexiblen Edelstahlseil oder einer starren Zugvorrichtung in Form einer dünnen Stange oder einem Rohr besteht.

8. Werkzeug zum Aushöhlen von Lebensmitteln nach einem der vorherigen Ansprüche, **dadurch gekennzeichnet, dass** das Messer (11, 12, 13), welches statisch oder auswechselbar an der Zugvorrichtung befestigt ist, aus einer kreisrunden Ausführung besteht, sowie hinsichtlich des Innendurchmessers größer ist als der Außendurchmesser des Trägerholmes (1).

9. Werkzeug zum Aushöhlen von Lebensmitteln nach einem der Ansprüche 3 bis 8, wenn zumindest auf den Anspruch 3 rückbezogen, **dadurch gekennzeichnet, dass** das kreisrunde Messer (11, --. 12, 13) aus einem zylinderförmigem Zentrum besteht, welches einen Durchmesser hat, der minimal kleiner ist, als der Innendurchmesser des Trägerholmes (1), so dass das zylinderförmige Zentrum in den Hohlraum des Trägerholmes (1) eingeführt werden kann, wobei dieses zylindrische Zentrum mit einem rechteckigen Messer (11, 12, 13) fest verbunden ist, welches im Schlitz (2) des Trägerholmes (1) läuft und das kreisrunde Messer (11, 12, 13) in einer festen Verbindung mit dem zylindrischen Zentrum und dem rechteckigen Messer (11, 12, 13) stabilisiert.

10. Werkzeug zum Aushöhlen von Lebensmitteln nach einem der Ansprüche 3 bis 9, wenn zumindest auf den Anspruch 3 rückbezogen, **dadurch gekennzeichnet, dass** an der Zugvorrichtung eine Spitze (9) fest oder lösbar befestigt ist, welche mit einer Nase (14) und einem zylindrischen Körper, (15) der vom Innendurchmesser minimal kleiner ist, als der Innendurchmesser des Trägerholmes (1) versehen ist und so in die Öffnung von Hohlraum und Schlitz (2) des Trägerholmes (1) eingeschoben und stabilisiert werden kann.

11. Werkzeug zum Aushöhlen von Lebensmitteln nach Anspruch 1, **dadurch gekennzeichnet, dass** der Trägerholm (1) innen hohl ist, oder aus Vollmaterial besteht und das Messer (11, 12, 13) mit seiner eckigen Klinge (13) sowie seiner kreisrunden Ausführung (11) ohne einen zylindrischen Körper direkt mit dem eckigen Messer (11, 12, 13) an einem Rohr befestigt ist, welches als Zugvorrichtung fungiert, vom Innendurchmesser minimal größer ist als der Durchmesser des Trägerholmes (1) und auf den Trägerholm (1) aufgeschoben wird, wobei der Innendurchmesser des kreisrunden Messers (11, 12, 13) oder der Innenraum des Messers (11, 12, 13), falls es eine andere Form als kreisrund hat, größer ist als der Außendurchmesser der Zugvorrichtung an welcher es befestigt ist, wobei der Trägerholm (1) auf welchen die Zugvorrichtung geschoben wird, außer rund, also rohrförmig, jede beliebige Form haben kann, hohl ausgeführt ist oder aus Vollmaterial bestehen kann und die hohle Zugvorrichtung wie bei hinsichtlich der Form ihres Hohlraumes der Außenform des Trägerholmes (1) angepaßt ist.

12. Werkzeug zum Aushöhlen von Lebensmitteln nach einem der vorherigen Ansprüche, **dadurch gekennzeichnet, dass** das Messer (11, 12, 13) gegen ein anderes Messer mit einer anderen Form auswechselbar ist, um verschiedene Schnitt- und Aushöhlergebnisse zu erzielen, jedoch immer einen größeren Innendurchmesser aufweist als der Außendurchmesser des Trägerholmes (1) um ein echtes, exaktes Aushöhlergebnis zu erzielen.

13. Werkzeug zum Aushöhlen von Lebensmitteln nach einem der vorherigen Ansprüche, **dadurch gekennzeichnet, dass** die Klingen der Messer (11, 12, 13), in allen Ausführungsformen, stets mindestens in Zugrichtung durch das Lebensmittel geschärft sind.

14. Werkzeug zum Aushöhlen von Lebensmitteln nach einem der vorherigen Ansprüche, **dadurch gekennzeichnet, dass** das Messer (11, 12, 13) an seinem Ende, der geschärften Seite entgegengesetzt, Nuten oder Löcher aufweist, in welches ein in der Dimension des Messers (11, 12, 13) ausgeführtes, geschlitztes mit Nasen versehenes Federstahlblech, nach Komprimieren durch Fingerdruck und Einführen in die Innendimension, den Hohlraum des Messers (11, 12, 13) mit seinen Nasen in diesen Nuten oder Löchern einrasten kann, um mit der gleichen Technik im Anschluss eine Hülse mit dem gleichen Federblech und dem Messer zu verbinden, damit die Hülse im Durchzugsvorgang durch das Lebensmittel, dem Ausschnitt des Messers (11, 12, 13) folgend, in das Lebensmittel gezogen und mit diesem gefüllt werden kann.

15. Verfahren zum Aushöhlen von Lebensmittel über ihren gesamten länglichen Verlauf, durch den Einsatz eines Werkzeugs zum Aushöhlen von Lebensmitteln nach einem der Ansprüche 1 bis 14, um ein Aushöhlergebnis zu erlangen, welches exakt der Lage des Trägerholmes (1) im Lebensmittel, so wie der Form und Dimension des mit der Zugvorrichtung in den Trägerholm eingeführten oder eingelegten Messers (11, 12, 13) entspricht, da das Messer (11, 12, 13) technikbedingt durch die Trägerholmführung nicht vom Verlauf des Trägerholmes (11, 12, 13) im Lebensmittel abweichen kann, während es mit der Zugvorrichtung durch das Lebensmittel gezogen wird.

## Claims

1. A tool for hollowing out food, comprising: a carrier spar (1), a pulling device, a knife (11, 12, 13), a tip (9), wherein the carrier spar (1) is elongated and receives the pulling device, to which the knife (11, 12, 13) is attached, which, during the pulling through the food using the pulling device, is guided in or on the carrier spar (1) in order to obtain a cutting result in the food that corresponds to the course of the carrier spar (1) and the shape of which is adapted to the desired hollowing result, wherein the tip (9) is located at the end of the pulling device, opposite the knife (11, 12, 13), which facilitates drilling of the food using the carrier spar (1) and the pulling device.

2. The tool for hollowing out food according to claim 1, **characterised in that** an end plate (5) is fitted and attached to the end of the carrier spar (1), which prevents the carrier spar (1) from slipping into the food during pulling through.

3. he tool for hollowing out food according to claim 1 or 2, **characterised in that** the carrier spar (1) is hollow on the inside in its longitudinal course and has a slot (2) via which the pulling device is placed into the carrier spar (1).

4. The tool for hollowing out food according to claim 3, **characterised in that** the elongate slot (2) in the hollow carrier spar (1), into which the pulling device is placed, has an enlargement/widening (3) in at least one location in order to receive the thickening (10) of the pulling device in it, wherein the thickening (10) of the pulling device adapts to the hollow shape of the carrier spar (1), but with a minimally smaller diameter than the inner diameter of the carrier spar (1) and the carrier spar (1) is made of a flexible material in order to adapt it to the shape of the food and to hold it in this shape.

5. The tool for hollowing out food according to one of the preceding claims, **characterised in that** the carrier spar (1) has the elongate shape of a tube and is provided with at least one barb (4).

6. The tool for hollowing out food according to claim 4, **characterised in that** the pulling device has the thickening (10) in at least one location, which is placed into the enlargement of the slot (2) of the carrier spar (1) in order to ensure the stable course of the pulling device in the cavity of the carrier spar (1) and which is preferably cylindrical and designed with a minimally smaller diameter than the inner diameter of the carrier spar (1).

7. The tool for hollowing out food according to one of the preceding claims, **characterised in that** the pulling device consists of a flexible stainless-steel cable or a rigid pulling device in the form of a thin rod or a tube.

8. The tool for hollowing out food according to one of the preceding claims, **characterised in that** the knife (11, 12, 13), which is statically or replaceably attached to the pulling device, consists of a circular design and is larger than the outer diameter of the carrier spar (1) with regard to the inner diameter.

9. The tool for hollowing out food according to one of claims 3 to 8, when referring back to at least claim 3, **characterised in that** the circular knife (11, 12, 13) consists of a cylindrical centre which has a diameter which is minimally smaller than the inner diameter of the carrier spar (1), so that the cylindrical centre can be inserted into the cavity of the carrier spar (1), this cylindrical centre being firmly connected to a rectangular knife (11, 12, 13) which runs in the slot (2) of the carrier spar (1) and stabilises the circular knife (11, 12, 13) in a firm connection with the cylindrical centre and the rectangular knife (11, 12, 13).

10. The tool for hollowing out food according to one of claims 3 to 9, when referring back at least to claim 3, **characterised in that** a tip (8) is firmly or detachably attached to the pulling device, which is provided with a nose (14) and a cylindrical body (15) the inner diameter of which is minimally smaller than the inner diameter of the carrier spar (1) and can thus be pushed into and stabilised in the opening of the cavity and slot (2) of the carrier spar (1).

11. The tool for hollowing out food according to claim 1, **characterised in that** the carrier spar (1) is hollow on the inside or consists of solid material and the knife (11, 12, 13) with its square blade (13) as well as its circular design (11) without a cylindrical body is attached directly with the square knife (11, 12, 13) to a tube, acting as a pulling device, is minimally larger in terms of internal diameter than the diameter of the carrier spar (1) and is fit onto the carrier spar (1), wherein the inner diameter of the circular knife (11, 12, 13) or the inner space of the knife (11, 12, 13), if it has a shape other than circular, is larger than the outer diameter of the pulling device to which it is attached, wherein the carrier spar (1) onto which the pulling device is pushed can have any shape other than round, i.e. tubular, is hollow or can consist of solid material and the hollow pulling device is adapted to the outer shape of the carrier spar (1) with regard to the shape of its cavity.

12. The tool for hollowing out food according to one of the preceding claims, **characterised in that** the knife (11, 12, 13) can be exchanged for another knife with a different shape in order to achieve different cutting and hollowing results, but always has a larger inner diameter than the outer diameter of the carrier spar (1) in order to achieve a true, exact hollowing result.

13. The tool for hollowing out food according to one of the preceding claims, **characterised in that** the blades of the knives (11, 12, 13), in all embodiments, are always sharpened at least in the pulling direction through the food.

14. The tool for hollowing out food according to one of the preceding claims, **characterised in that** the knife (11, 12, 13) has grooves or holes at its end, opposite the sharpened side, into which a slotted spring steel sheet provided with noses, designed in the dimension of the knife (11, 12, 13), after compression by finger pressure and insertion into the inner dimension, can engage with its noses in these grooves or holes, the cavity of the knife (11, 12, 13) can engage with its noses in these grooves or holes, in order to subsequently connect a sleeve with the same spring steel plate and the knife using the same technique, so that the sleeve can be pulled through the food, following the cut-out of the knife (11, 12, 13), into the food and filled with it.

15. A method for hollowing out food over their entire course, by using a tool for hollowing out food according to one of claims 1 to 14, in order to obtain a hollowing result which corresponds exactly to the position of the carrier spar (1) in the food, as well as the shape and dimension of the knife (11, 12, 13) inserted in or placed into the carrier spar with the pulling device, since the knife (11, 12, 13) cannot deviate from the course of the carrier spar (11, 12, 13) in the food due to the technology of the carrier spar guide while it is pulled through the food with the pulling device.

## Revendications

1. Outil prévu pour creuser les produits alimentaires, comprenant : un fourreau (1), un dispositif de traction, un couteau (11, 12, 13), une pointe (9), ledit fourreau (1) étant longitudinal et servant de logement au dispositif de traction auquel est fixé le couteau (11, 12, 13), qui est guidé dans ou par le fourreau (1) lors de la traction à travers le produit alimentaire au moyen du dispositif de traction, afin d'obtenir dans le produit alimentaire un résultat de découpe qui correspond à la trajectoire du fourreau (1) et dont la forme est adaptée à celle du résultat d'évidement souhaité, ladite pointe (9) permettant de faciliter le perçage du produit alimentaire par le fourreau (1) et par le dispositif de traction se trouvant à l'extrémité du dispositif de traction face au couteau (11, 12, 13).

2. Outil prévu pour creuser les produits alimentaires selon la revendication 1, **caractérisé en ce qu'**une plaque terminale (5) est enfichée et fixée à l'extrémité du fourreau (1) et empêche que le fourreau (1) ne soit entraîné dans le produit alimentaire lors de la traction à travers le produit alimentaire.

3. Outil prévu pour creuser les produits alimentaires selon les revendications 1 ou 2, **caractérisé en ce que** le fourreau (1) est creux en sa longueur et possède une fente (2) par laquelle le dispositif de traction est placé dans le fourreau (1).

4. Outil prévu pour creuser les produits alimentaires selon la revendication 3, **caractérisé en ce que** la fente longitudinale (2) dans le fourreau (1), dans laquelle est posé le dispositif de traction, possède en au moins un point un agrandissement/élargissement (3) permettant d'y loger le renflement (10) du dispositif de traction, ledit renflement (10) du dispositif de traction s'adaptant à la forme creuse du fourreau (1), avec toutefois un diamètre très légèrement inférieur au diamètre intérieur du fourreau (1), et le fourreau (1) étant fabriqué en une matière flexible, afin de l'adapter à la forme du produit alimentaire et le maintenir dans cette forme.

5. Outil prévu pour creuser les produits alimentaires selon l'une quelconque des revendications précédentes, **caractérisé en ce que** le fourreau (1) possède la forme longitudinale d'un tube et est doté d'au moins un crochet.

6. Outil prévu pour creuser les produits alimentaires selon la revendication 4, **caractérisé en ce que** le dispositif de traction possède en au moins point le renflement (10) insérée dans l'agrandissement de la fente (2) du fourreau (1), afin d'assurer le mouvement contrôlé du dispositif de traction dans la cavité du fourreau (1), ledit renflement étant de préférence de forme cylindrique et réalisé avec un diamètre très légèrement inférieur au diamètre intérieur du fourreau (1).

7. Outil prévu pour creuser les produits alimentaires selon l'une quelconque des revendications précédentes, **caractérisé en ce que** le dispositif de traction se compose d'un câble en acier spécial souple ou d'un dispositif de traction rigide possédant la forme d'une fine tige ou d'un tube.

8. Outil prévu pour creuser les produits alimentaires selon l'une quelconque des revendications précédentes, **caractérisé en ce que** le couteau (11, 12, 13) fixé de manière solidaire ou amovible au dispositif de traction se compose d'un modèle circulaire présentant un diamètre intérieur supérieur au diamètre extérieur du fourreau (1).

9. Outil prévu pour creuser les produits alimentaires selon l'une quelconque des revendications 3 à 8, dès lors qu'elle se réfère au moins à la revendication 3, **caractérisé en ce que** le couteau circulaire (11, 12, 13) se compose d'un centre de forme cylindrique dont le diamètre est très légèrement inférieur au diamètre intérieur du fourreau (1), de sorte que le centre cylindrique puisse être inséré dans la cavité du fourreau (1), ledit centre cylindrique étant solidaire d'un couteau rectangulaire (11, 12, 13) circulant dans la fente (2) du fourreau (1) et stabilisant le couteau circulaire (11, 12, 13) par un assemblage solidaire au centre cylindrique et au couteau rectangulaire (11, 12, 13).

10. Outil prévu pour creuser les produits alimentaires selon l'une quelconque des revendications 3 à 9, dès lors qu'elle se réfère au moins à la revendication 3, **caractérisé en ce que** le dispositif de traction porte une pointe qui y est fixée de manière solidaire ou amovible, ladite pointe étant dotée d'un nez (14) et d'un corps cylindrique (15), dont le diamètre intérieur est très légèrement inférieur au diamètre intérieur du fourreau (1), et peut être glissée ainsi dans l'orifice de la cavité et de la fente (2) du fourreau (1) et stabilisée.

11. Outil prévu pour creuser les produits alimentaires selon la revendication 1, **caractérisé en ce que** le fourreau (1) est creux à l'intérieur ou réalisé en une matière massive, et que le couteau (11, 12, 13) avec sa lame rectangulaire (13) ainsi que son modèle circulaire (11) est fixé sans corps cylindrique directement avec le couteau rectangulaire (11, 12, 13) à un tube agissant en tant que dispositif de traction, ledit tube possédant un diamètre intérieur très légèrement supérieur au diamètre du fourreau (1) et coulissant sur le fourreau (1), ledit diamètre intérieur du couteau circulaire (11, 12, 13) ou l'espace intérieur du couteau (11, 12, 13) - dès lors qu'il possède une forme autre que circulaire - étant supérieur au diamètre extérieur du dispositif de traction auquel il est fixé, le fourreau (1) sur lequel le dispositif de traction est glissé pouvant posséder une forme quelconque à l'exception d'une forme ronde, c'est-à-dire tubulaire, et étant creux ou en matière massive, et le dispositif de traction creux étant adapté à la forme extérieure du fourreau (1), à l'instar de la forme de sa cavité.

12. Outil prévu pour creuser les produits alimentaires selon l'une quelconque des revendications précédentes, **caractérisé en ce que** le couteau (11, 12, 13) peut être remplacé par un autre couteau d'une autre forme, afin d'obtenir différents résultats de découpe et d'évidement, mais présente toujours un diamètre intérieur supérieur au diamètre extérieur du fourreau (1) pour atteindre un résultat d'évidement réel et précis.

13. Outil prévu pour creuser les produits alimentaires selon l'une quelconque des revendications précédentes, **caractérisé en ce que** les lames des couteaux (11, 12, 13), quelles que soient les formes des modèles, sont toujours tranchantes au minimum dans le sens de la traction à travers le produit alimentaire.

14. Outil prévu pour creuser les produits alimentaires selon l'une quelconque des revendications précédentes, **caractérisé en ce que** le couteau (11, 12, 13) porte à son extrémité opposée au côté tranchant des rainures ou orifices, dans lesquels une tôle en acier de ressort réalisée aux dimensions du couteau (11, 12, 13), fendue et dotée de nez, puisse enclencher par ses nez la cavité du couteau (11, 12, 13) dans ces rainures ou orifices après avoir été comprimée à la force des doigts et insérée dans la dimension intérieure, pour assembler ensuite au moyen de la même technique une tubulure avec la même tôle en acier de ressort et le couteau, afin que ladite tubulure soit entraînée dans le produit alimentaire lors du même processus de traction à travers le produit alimentaire en suivant la découpe pratiquée par le couteau (11, 12, 13), et se remplisse du produit alimentaire.

15. Procédé prévu pour creuser les produits alimentaires sur toute leur trajectoire longitudinale par l'utilisation d'un outil prévu pour creuser les produits alimentaires selon l'une quelconque des revendications 1 à 14, afin d'obtenir un résultat d'évidement qui corresponde exactement à la longueur du fourreau (1) dans le produit alimentaire, ainsi qu'à la forme et aux dimensions du couteau (11, 12, 13) introduit au moyen du dispositif de traction ou posé dans le fourreau (1), puisque, pour des raisons techniques associées au guidage du fourreau, le couteau (11, 12, 13) ne peut pas dévier de la trajectoire du fourreau (11, 12, 13) dans le produit alimentaire, lorsqu'il est tiré à travers le produit alimentaire à l'aide du dispositif de traction.
